# EUROPÄISCHE PATENTANMELDUNG

(11) **EP 4 631 745 A1**
(43) Veröffentlichungstag der Anmeldung: **15.10.2025**
(21) Anmeldenummer: 25163009.1
(22) Anmeldetag: 11.03.2025
(51) Int. Cl.: B60C 11/00, B60C 19/08, B60C 11/01, B60C 9/04

(54) **ROLLWIDERSTANDSOPTIMIERTER FAHRZEUGLUFTREIFEN MIT VERBESSERTEN ELEKTRISCHEN LEITFÄHIGKEITSEIGENSCHAFTEN**

(30) Priorität: 09.04.2024 DE 102024203193
(71) Anmelder: Continental Reifen Deutschland GmbH, 30175 Hannover (DE)
(72) Erfinder: Peters, Klaus, 30175 Hannover (DE); Schramm, Joachim, 30175 Hannover (DE); Jeromin, Dieter, 30175 Hannover (DE); Dr. Goossen, Sebastian, 30175 Hannover (DE)
(74) Vertreter: Continental Corporation

(57) **Zusammenfassung**

Die Erfindung betrifft einen Fahrzeugluftreifen (10), umfassend: i) eine Reifenkarkasse (12) mit metallischen Festigkeitsträgern, umfassend einen Gummiwerkstoff G1, ii) eine oder mehrere Verstärkungslagen (14), umfassend einen Gummiwerkstoff S1, iii) ein erstes Verstärkungslagenstützelement (16), umfassend einen Gummiwerkstoff S2, und ein zweites Verstärkungslagenstützelement (18), umfassend einen Gummiwerkstoff S3, iv) ein erstes Seitenwandbauteil (20), umfassend einen Gummiwerkstoff S4, und ein zweites Seitenwandbauteil (22), umfassend einen Gummiwerkstoff S5, v) einen Laufstreifen (24), umfassend: eine Decklage (26), umfassend einen Gummiwerkstoff S6, eine Grundlage (28), umfassend einen Gummiwerkstoff G2, und einen oder mehrere Leitfähigkeitsbereiche (30), umfassend einen Gummiwerkstoff G3, und vi) ein erstes Verbindungselement (32), umfassend einen Gummiwerkstoff G4, wobei das erste Verbindungselement (32) zwischen der Reifenkarkasse (12) und der Grundlage (28) angeordnet ist, und wobei das erste Verbindungselement (32) zwischen dem ersten Verstärkungslagenstützelement (16) und dem ersten Seitenwandbauteil (20) angeordnet ist, wobei gilt, dass ρ_{(s; min)} größer ist als p_{(G; max)}, wobei ρ_{(s; min)} der kleinste spezifische elektrische Widerstand bei 20 °C der Gummiwerkstoffe S1 bis S6 ist, und wobei ρ_{(G; max)} der größte spezifische elektrische Widerstand bei 20 °C der Gummiwerkstoffe G1 bis G4 ist.

## Beschreibung

Die Erfindung betrifft einen Fahrzeugluftreifen mit vorteilhaftem Rollwiderstand und verbesserten elektrischen Leitfähigkeitseigenschaften.

Eine wesentliche Komponente moderner Fahrzeugluftreifen, die in vielen Fällen maßgeblich für die Leistungscharakteristika dieser Produkte verantwortlich ist, ist der Laufstreifen. Heutzutage bestehen Laufstreifen dabei zumeist aus mehreren verschiedenen Komponenten, insbesondere verschiedenen Gummiwerkstoffen, welche durch Vulkanisation aus vulkanisierbaren Kautschukmischungen erhalten werden können. Die meisten Laufstreifen, insbesondere im LKW-Bereich, umfassen einen oder mehrere Gummiwerkstoffe, die im späteren Einsatz Kontakt mit der Fahrbahn haben sollen und hinsichtlich ihrer Eigenschaften für diesen Zweck optimiert werden. Diese quasi als Decklage fungierende Schicht wird dabei aus einer vulkanisierbaren Kautschukmischung hergestellt, die zuweilen auch als "Cap-Mischung" bezeichnet wird, die häufig große Anteile von nicht elektrisch leitenden Füllstoffen, wie beispielsweise gefälltem Siliciumdioxid umfasst.

Dem Fachmann ist bewusst, dass ein Fahrzeugreifen für die überwiegende Zahl von Anwendungen aus technischen und/oder regulatorischen Gründen in seiner Gesamtheit eine gewisse elektrische Leitfähigkeit aufweisen muss, die eine unerwünschte statische Aufladung verhindern kann. In vielen Fällen verfügt jedoch der Gummiwerkstoff der Decklage nicht über eine hinreichende elektrische Leitfähigkeit, um dies zu gewährleisten.

Daher wird die elektrische Leitfähigkeit des gesamten Laufstreifens im Stand der Technik zumeist durch die Base-Mischung der darunter liegenden Grundlage realisiert, die eine gesteigerte elektrische Leitfähigkeit aufweist, insbesondere in Folge eines hohen Rußgehaltes. Hierzu wird beispielsweise ein Materialstrang aus der Grundlage bis zur Oberseite des Laufstreifens geführt, welcher dadurch eine elektrisch leitfähige Verbindung zwischen der Oberfläche des Laufstreifens und der Grundlage herstellt. Die entsprechende Struktur ist ein Leitfähigkeitsbereich und wird auch als "Carbon Center Beam" (CCB) bezeichnet.

Durch den Einsatz eines CCB und vergleichbarer Maßnahmen lässt sich die zuweilen unzureichende elektrische Leitfähigkeit des Laufstreifens heutzutage meist gut kompensieren. Hierbei wurde bislang ausgenutzt, dass die unterhalb des Laufstreifens angeordneten Lagen, insbesondere das Gürtelpaket, in der Vergangenheit ausreichend leitfähig war, um die elektrostatische Aufladung zu verhindern, zumindest bei den aus dem Stand der Technik bekannten Fahrzeugreifen. Allerdings besteht im Zuge der angestrebten weiteren Optimierung der Rolleigenschaften moderner Fahrzeugluftreifen ein grundsätzliches Interesse daran, auch die Zusammensetzung der im Gürtelpaket eingesetzten Gummiwerkstoffe weiter hinsichtlich der Rollwiderstandseigenschaften zu optimieren. Mit dieser Optimierung kann jedoch einhergehen, dass auch die elektrische Leitfähigkeit des Gürtelpakets, insbesondere der Gürtellagen, weiter verringert wird. In diesen Fällen besteht die Gefahr, dass eine Kontaktierung der Fahrbahnoberfläche durch einen CCB, welcher im Reifeninneren auf das Gürtelpaket bzw. dessen Spulbandage trifft, keine hinreichende elektrische Leitfähigkeit des Fahrzeugluftreifens mehr sicherstellen kann.

Wenn das Gürtelpaket als Teil des Leitpfades für die Ableitung elektrischer Aufladung im Fahrzeugreifen ausfällt, kämen prinzipiell noch die Seitenwandelemente infrage, durch die bei hinreichender elektrischer Leitfähigkeit eine Ableitung in Richtung der Reifenwulst und damit der Felge gewährleisten kann. Allerdings haben neben dem Gummiwerkstoff der Lauffläche sowie dem Gummiwerkstoff des Gürtelpakets auch die Seitenwandelemente und der darin verbaute Gummiwerkstoff einen nicht unerheblichen Einfluss auf den Gesamtrollwiderstand des Reifens. Insoweit besteht im Stand der Technik grundsätzlich ein Interesse daran, auch die Seitenwandelemente durch die Wahl einer rollwiderstandsoptimierten Gummimischung für einen niedrigen Gesamtrollwiderstand zu optimieren. Analog zu den vorstehenden Ausführungen zum Gürtelpaket bedeutet dies jedoch in den meisten Fällen, dass die elektrische Leitfähigkeit der Seitenwandelemente zu stark reduziert wird, als dass diese als Teil des notwendigen elektrischen Leitweges fungieren könnten.

In einem Fahrzeugluftreifen, in dem neben der Decklage des Laufstreifens auch die Gummierung der Gürtellagen und der Gummiwerkstoff des Seitenwandbauteils rollwiderstandsoptimiert ausgelegt wird, kann der elektrische Leitweg des Reifens nicht die erforderliche elektrische Gesamtleitfähigkeit der Fahrzeugreifens gewährleisten, so dass einer solchen Konstruktion, die andernfalls unter rollwiderstandsoptimierten Überlegungen bevorzugt wäre, nicht umgesetzt werden kann und insoweit Potential ungenutzt bleibt.

Die primäre Aufgabe der vorliegenden Erfindung war es, die Nachteile des Standes der Technik auszuräumen oder zumindest zu verringern.

Insbesondere war es die Aufgabe der vorliegenden Erfindung, einen rollwiderstandsoptimierten Fahrzeugluftreifen anzugeben, in dem sowohl der Gummiwerkstoff der Decklage als auch der Seitenwandelemente und der Gürtellagengummierung mit Blick auf eine Rollwiderstandsoptimierung ausgelegt werden kann, und trotzdem die erforderliche elektrische Gesamtleitfähigkeit des Fahrzeugluftreifens sichergestellt werden kann.

Es war eine Aufgabe der vorliegenden Erfindung, dass die anzugebende Lösung die Konstruktion von Fahrzeugluftreifen mit ausgezeichneten Anwendungseigenschaften, insbesondere einem niedrigen Rollwiderstand und einer guten elektrischen Leitfähigkeit, welche unerwünschte elektrostatische Aufladungen sicher vermeidet, ermöglichen sollte. Zudem war es eine Aufgabe der vorliegenden Erfindung, dass die anzugebende Lösung die Konstruktion von mechanisch hoch belastbaren Fahrzeugluftreifen erlauben sollte.

Es war eine zusätzliche Aufgabe der vorliegenden Erfindung, dass die anzugebende Lösung bei der Herstellung entsprechender Fahrzeugluftreifen in zeit- und kosteneffizienter Art und Weise umsetzbar sein sollte, wobei es eine wünschenswerte Vorgabe war, dass die anzugebende Lösung möglichst weitgehend auf solche Vorrichtungen und Materialien zurückgreifen sollte, welche bei der Reifenfertigung bereits heute zum Einsatz kommen.

Die Erfinder der vorliegenden Erfindung haben nunmehr gefunden, dass sich die vorstehend beschriebenen Aufgaben lösen lassen, wenn in einem Fahrzeugluftreifen mit Metallkord-Karkasse, dessen Bauteile sehr weitgehend aus einem hinsichtlich des Rollwiderstands optimierten und daher schlecht leitenden Gummiwerkstoff bestehen, insbesondere hinsichtlich der Decklage des Laufstreifens, der Gummierung der Verstärkungslagen und der Seitenwandbauteile, wenn zumindest ein erstes Verbindungselement aus einem gut leitfähigen Gummiwerkstoff die Verbindung zwischen der gut leitfähigen Reifenkarkasse und der gut leitfähigen Grundlage herstellt, welches zwischen einem Verstärkungslagenstützelement und einem Seitenwandbauteil angeordnet wird, wie es in den Ansprüchen definiert ist.

Durch den erfindungsgemäßen Aufbau ist es dabei möglich, die elektrische Leitfähigkeit durch den CCB und die Base des Laufstreifens hindurch über das Verbindungselement in die Reifenkarkasse zu erlauben, über die der Leitpfad über die Karkasse in die Reifenwulst und damit in die Felge sichergestellt werden kann. Hierbei stellt die konstruktive Ausgestaltung des Fahrzeugluftreifens unter Einsatz von spezifischen Verstärkungslagenstützelementen, welche die Ränder der Verstärkungslagen abstützen und die Anordnung des die Leitfähigkeit gewährleistenden Verbindungselementes zwischen diesen Verstärkungslagenstützelementen und den Seitenwandelementen in zuverlässiger Weise die mechanische Belastbarkeit der entsprechenden Fahrzeugluftreifen sicher, sodass vorteilhafte elektrische Leitfähigkeitseigenschaften mit einer hohen mechanischen Belastbarkeit und ausgezeichneten Rollwiderstandseigenschaften kombiniert werden können.

Die vorstehend genannten Aufgaben werden somit durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden.

Insbesondere bevorzugte Ausführungsformen der Erfindung sind in den Ausführungsbeispielen offenbart. Besonders bevorzugte Ausführungsformen der Erfindung weisen dabei zwei oder mehr, bevorzugt drei oder mehr, ganz besonders bevorzugt vier oder mehr, der nachfolgend offenbarten bevorzugten Merkmale der Erfindung auf, welche auch in den Ausführungsbeispielen realisiert sind.

In Übereinstimmung mit dem fachmännischen Verständnis werden die nachfolgenden Reifenkomponenten des gleichen Namens, welche auf beiden Seiten des Fahrzeugreifens vorliegen, in besonders bevorzugten Ausgestaltungen mit den gleichen bevorzugten Merkmalen ausgeführt.

Die Erfindung betrifft einen Fahrzeugluftreifen, umfassend:
i) eine Reifenkarkasse, umfassend einen oder mehrere in einem Gummiwerkstoff G1 eingebettete erste Festigkeitsträger, wobei die ersten Festigkeitsträger metallische Festigkeitsträger sind,
ii) eine oder mehrere relativ zur Reifenkarkasse in radialer Richtung außenliegende Verstärkungslagen, umfassend einen oder mehrere in einem Gummiwerkstoff S1 eingebettete zweiten Festigkeitsträger,
iii) ein erstes Verstärkungslagenstützelement, umfassend einen Gummiwerkstoff S2, und ein zweites Verstärkungslagenstützelement, umfassend einen Gummiwerkstoff S3, wobei das erste Verstärkungslagenstützelement und das zweites Verstärkungslagenstützelement bezogen auf die axiale Richtung auf unterschiedlichen Seiten der Verstärkungslage zumindest abschnittsweise derart zwischen der Reifenkarkasse und der Verstärkungslage angeordnet sind, dass sie die Reifenkarkasse und eine Verstärkungslage kontaktieren,
iv) ein relativ zur Reifenkarkasse in axialer Richtung oberhalb angeordnetes erstes Seitenwandbauteil, umfassend einen Gummiwerkstoff S4, und ein relativ zur Reifenkarkasse in axialer Richtung oberhalb angeordnetes zweites Seitenwandbauteil, umfassend einen Gummiwerkstoff S5,
v) einen relativ zur der oder den Verstärkungslagen in radialer Richtung außenliegenden Laufstreifen, umfassend:
   v.1) eine Decklage, umfassend einen Gummiwerkstoff S6,
   v.2) eine relativ zur Decklage in radialer Richtung innenliegende Grundlage, umfassend einen Gummiwerkstoff G2, und
   v.3) einen oder mehrere Leitfähigkeitsbereiche, umfassend einen Gummiwerkstoff G3, wobei sich der oder die Leitfähigkeitsbereiche, beispielsweise von der Grundlage ausgehend, durch die Decklage hindurch bis zur radial außenliegenden Oberfläche der Decklage erstrecken, und
vi) ein erstes Verbindungselement, umfassend einen Gummiwerkstoff G4, wobei das erste Verbindungselement zwischen derReifenkarkasse und der Grundlage angeordnet ist und wobei das erste Verbindungselement zwischen dem ersten Verstärkungslagenstützelement und dem ersten Seitenwandbauteil angeordnet ist,

wobei gilt, dass ρ_{(S; min)} größer ist als ρ_{(G; max),}
wobei ρ_{(S; min)} der kleinste spezifische elektrische Widerstand bei 20 °C der spezifischen elektrischen Widerstände bei 20 °C des Gummiwerkstoffs S1, des Gummiwerkstoffs S2, des Gummiwerkstoffs S3, des Gummiwerkstoffs S4, Gummiwerkstoffs S5 und des Gummiwerkstoffs S6 ist, und
wobei ρ_{(G; max)} der größte spezifische elektrische Widerstand bei 20 °C der spezifischen elektrischen Widerstände bei 20 °C des Gummiwerkstoffs G1, des Gummiwerkstoffs G2, Gummiwerkstoffs G3 und des Gummiwerkstoffs G4 ist.

Fahrzeugluftreifen an sich sind dem Fachmann im Bereich der Technik umfassend vertraut und die überwiegende Zahl der vorstehend definierten Bestandteile korrespondieren mit dem üblichen Aufbau eines Fahrzeugluftreifens, was als Vorteil gesehen werden kann, da die Herstellung erfindungsgemäßer Fahrzeugluftreifen dadurch unter Verwendung solcher Prozesse und Vorrichtungen erfolgen kann, die im Bereich der Technik üblich sind, beispielsweise durch den Aufbau der vorhergehenden Fahrzeugluftreifenrohlinge auf einer Reifenaufbautrommel.

Der erfindungsgemäße Fahrzeugluftreifen umfasst in der Reifenkarkasse metallische Festigkeitsträger und eignet sich daher besonders für den Einsatz außerhalb des Bereichs der PKW-Reifen. Bevorzugt ist vielmehr ein erfindungsgemäßer Fahrzeugreifen, wobei der Fahrzeugluftreifen ein Nutzfahrzeug-Reifen, bevorzugt ein LKW- oder VAN-Reifen, besonders bevorzugt ein LKW-Reifen, ist.

Die verschiedenen Komponenten der vorstehenden Definition umfassen jeweils einen Gummiwerkstoff. Gummiwerkstoffe sind dem Fachmann im Bereich der Technik bekannt und sind insbesondere herstellbar durch die Vulkanisation entsprechender vulkanisierbarer Kautschukmischungen, wie sie grundsätzlich aus dem Stand der Technik bekannt sind. Es handelt sich somit in anderen Worten um einen erfindungsgemäßer Fahrzeugreifen, wobei die Gummiwerkstoffe S1 bis S8 herstellbar sind durch Vulkanisation einer entsprechenden vulkanisierbaren Kautschukmischung VK-S1 bis VK-S8, und/oder wobei die Gummiwerkstoffe G1 bis G5 herstellbar sind durch Vulkanisation einer entsprechenden vulkanisierbaren Kautschukmischung VK-G1 bis VK-G5.

Im Rahmen der vorliegenden Erfindung werden zwei Gruppen von Gummiwerkstoffen unterschieden, nämlich die Gummiwerkstoffe G, zu denen insbesondere die Gummiwerkstoffe G1 bis G5 gehören, und die Gummiwerkstoffe S, zu denen insbesondere die Gummiwerkstoffe S1 bis S8 gehören. Der Buchstabe G in den Gummiwerkstoffen G steht als Indikator für "gut" und drückt aus, dass die entsprechenden Gummiwerkstoffe eine vergleichsweise gute elektrische Leitfähigkeit aufweisen. Der Buchstabe S in den Gummiwerkstoffen S steht hingegen für "schlecht" und drückt aus, dass diese Gummiwerkstoffe eine vergleichsweise niedrige elektrische Leitfähigkeit aufweisen, wie es insbesondere in Folge einer Rollwiderstandsoptimierung der Fall ist. Die Gummiwerkstoffe S und die Gummiwerkstoffe G werden im Rahmen der vorliegenden Erfindung über die Maßgabe unterschieden, dass ρ_{(S; min)} größer ist als ρ_{(G; max),} wobei ρ_{(S; min)} der kleinste spezifische elektrische Widerstand bei 20 °C der spezifischen elektrischen Widerstände bei 20 °C des Gummiwerkstoffs S1, des Gummiwerkstoffs S2, des Gummiwerkstoffs S3, des Gummiwerkstoffs S4, Gummiwerkstoffs S5 und des Gummiwerkstoffs S6 ist, und wobei ρ_{(G; max)} der größte spezifische elektrische Widerstand bei 20 °C der spezifischen elektrischen Widerstände bei 20 °C des Gummiwerkstoffs G1, des Gummiwerkstoffs G2, Gummiwerkstoffs G3 und des Gummiwerkstoffs G4 ist.

Die Unterscheidung erfolgt somit über den spezifischen elektrischen Widerstand bei 20°C, d.h. des Kehrwerts der elektrischen Leitfähigkeit. Die vorstehende Definition drückt aus, dass sämtliche Gummiwerkstoffe S eine niedrigere elektrische Leitfähigkeit, d.h. einen höheren spezifischen elektrischen Widerstand, aufweisen als die Gummiwerkstoffe G. Entsprechend sind in der vorstehenden Definition des erfindungsgemäßen Fahrzeugluftreifens solche Komponenten, welche einen Gummiwerkstoff G umfassen, d.h. der Leitfähigkeitsbereich (CCB), die Grundlage des Laufstreifens (Base), das erste Verbindungselement (von den Erfindern auch als "Sidewall-Bypass-Element" bezeichnet) und die Gummierung der Reifenkarkasse, zum Leitfähigkeitspfad des Fahrzeugluftreifens beitragen.

Während die Gummiwerkstoffe G somit eine relativ hohe elektrische Leitfähigkeit aufweisen, können die Gummiwerkstoffe S unter anderen Gesichtspunkten optimiert werden, insbesondere hinsichtlich eines optimierten Rollwiderstandes. Nach Einschätzung der Erfinder ist es dabei zweckmäßig, die Möglichkeit zur Optimierung der Gummiwerkstoffe S unabhängig von der elektrischen Leitfähigkeit dazu auszunutzen, dass besonders fahrrelevante Eigenschaften, insbesondere der Rollwiderstand, möglichst weit optimiert werden, wodurch jedoch der spezifische elektrische Widerstand der entsprechenden Gummiwerkstoffe steigt. Gleichzeitig ist es zweckmäßig, für einen effizienten elektrischen Leitpfad im Fahrzeugreifen die Gummiwerkstoffe G hinreichend leitfähig auszugestalten. Entsprechend ist es für die weit überwiegende Zahl der Fahrzeugreifen bevorzugt, die vorstehend beschriebene Trennlinie der Leitfähigkeiten möglichst breit zu separieren. Bevorzugt ist somit ein erfindungsgemäßer Fahrzeugreifen, wobei gilt, dass ρ_{(S; min)} größer ist als 2*ρ_{(G; max),} bevorzugt größer ist als 5*ρ_{(G; max),} besonders bevorzugt größer ist als 10*ρ_{(G; max),} ganz besonders bevorzugt größer ist als 50*ρ_{(G; max),} insbesondere bevorzugt größer ist als 100*ρ_{(G; max)}.

Die spezifischen elektrischen Widerstände der Gummiwerkstoffe der Kategorien S und G können auch in absoluten Werten definiert werden. In Übereinstimmung mit dem fachmännischen Verständnis liegen die elektrischen Widerstände im Bereich der Gummiprodukte selbst für relativ gut leitende Materialien deutlich über denen, von beispielsweise Metallen. Im Rahmen der vorliegenden Erfindung können relative Angaben über den spezifischen elektrischen Widerstand in vorteilhafter Weise unabhängig vom jeweiligen Messverfahren getroffen werden, sofern die zu vergleichenden Gummiwerkstoffe mit dem gleichen Verfahren vermessen werden. Die Bestimmung absoluter Werte für den spezifischen elektrische (Durchgangs-)Widerstand bei 20 °C analog zu DIN IEC 60093:1993-12.

Bevorzugt ist hinsichtlich der absoluten Werte ein erfindungsgemäßer Fahrzeugreifen, wobei der spezifische elektrische Widerstand bei 20 °C des Gummiwerkstoffs S1 und/oder des Gummiwerkstoffs S2 und/oder des Gummiwerkstoffs S3 und/oder des Gummiwerkstoffs S4 und/oder des Gummiwerkstoffs S5 und/oder des Gummiwerkstoffs S6, bevorzugt sämtlicher Gummiwerkstoffe S1 bis S6, 10⁶ Ω m oder mehr, bevorzugt 10⁷ Ω m oder mehr, besonders bevorzugt 10⁸ Ω m oder mehr, beträgt. Bevorzugt ist daran anknüpfend zusätzlich oder alternativ ein erfindungsgemäßer Fahrzeugreifen, wobei ρ_{(S; min)} 10⁶ Ω m oder mehr, bevorzugt 10⁷ Ω m oder mehr, besonders bevorzugt 10⁸ Ω m oder mehr, beträgt.

Bevorzugt ist zusätzlich oder alternativ auch ein erfindungsgemäßer Fahrzeugreifen, wobei der spezifische elektrische Widerstand bei 20 °C des Gummiwerkstoffs G1 und/oder des Gummiwerkstoffs G2 und/oder des Gummiwerkstoffs G3 und/oder des Gummiwerkstoffs G4 und/oder des Gummiwerkstoffs G5, bevorzugt sämtlicher Gummiwerkstoffe G1 bis G6, weniger als 10⁶ Ω m, bevorzugt weniger als 10⁵ Ω m, besonders bevorzugt weniger als 10⁴ Ω m, beträgt. Bevorzugt ist diesbezüglich zusätzlich oder alternativ auch ein erfindungsgemäßer Fahrzeugreifen, wobei ρ_{(G; max)} weniger als 10⁶ Ω m, bevorzugt weniger als 10⁵ Ω m, besonders bevorzugt weniger als 10⁴ Ω m, beträgt.

Wesentlicher Bestandteil eines erfindungsgemäßen Fahrzeugluftreifens ist die Reifenkarkasse. Diese umfasst in Übereinstimmung mit dem fachmännischen Verständnis einen oder mehrere Festigkeitsträger, welche in einer Gummierung eingebettet sind, wobei es sich im Falle der bevorzugten LKW-Reifen zumeist nur um einen Festigkeitsträger handelt. Im erfindungsgemäßen Fahrzeugluftreifen ist die Gummierung durch einen Gummiwerkstoff G1 gebildet, sodass die Gummierung der Reifenkarkasse gut leitfähig ist und einen Teil des Leitpfads bilden kann. Insoweit geht aus der vorstehenden Definition auch hervor, dass die ersten Festigkeitsträger nicht beliebig ausgewählt sind, sondern es sich vielmehr um metallische Festigkeitsträger handelt, was im Rahmen der vorliegenden Erfindung als erforderlich angesehen wird, um die gewünschte Leitfähigkeit durch die Karkasse zuverlässig sicherzustellen. Durch diese Ausgestaltung eignen sich die erfindungsgemäßen Fahrzeugluftreifen insbesondere als Nutzfahrzeugreifen, vor allem Lkw-Reifen. Beispielhaft ist für mache Fahrzeugreifen ein erfindungsgemäßer Fahrzeugreifen, wobei die Reifenkarkasse eine Vielzahl an ersten Festigkeitsträgern umfasst. Bevorzugt ist gerade für Nutzfahrzeuge aber ein erfindungsgemäßer Fahrzeugreifen, wobei die Reifenkarkasse genau einen ersten Festigkeitsträger umfasst. Bevorzugt ist zusätzlich oder alternativ ein erfindungsgemäßer Fahrzeugreifen, wobei die ersten Festigkeitsträger ausgewählt sind aus der Gruppe bestehend aus eisenhaltigen Festigkeitsträgern, bevorzugt stählernen Festigkeitsträgern.

In radialer Richtung oberhalb der Reifenkarkasse liegen eine oder mehrere Verstärkungslagen. Diese Verstärkungslagen umfassen zweite Festigkeitsträger, welche wiederum in eine Gummierung eingebettet sind, die im Rahmen der vorliegenden Erfindung als Gummiwerkstoff S1 bezeichnet und entsprechend den schlecht leitfähigen Gummiwerkstoffen zugeordnet wird. Zumindest theoretisch können die Verstärkungslagen dabei auch eine sogenannte Spulbandage umfassen, wobei diese nach Einschätzung der Erfinder für die bevorzugten Lkw-Reifen eher unüblich wäre. Eher für Anwendungen außerhalb des LKW-Bereichs relevant ist somit ein erfindungsgemäßer Fahrzeugreifen, wobei der Fahrzeugreifen als Verstärkungslage zumindest eine Spulbandage umfasst, wobei die Spulbandage bevorzugt in radialer Richtung außenliegend zu den Gürtellagen angeordnet ist. Beispielhaft ist in diesem Fall ein erfindungsgemäßer Fahrzeugreifen, wobei die zweiten Festigkeitsträger der Spulbandage ausgewählt sind aus der Gruppe bestehend aus textilen Festigkeitsträgern.

Nach Einschätzung der Erfinder besonders relevant ist hingegen der Einsatz von Gürtellagen, wobei es insbesondere vorteilhaft ist, eine Vielzahl entsprechender Gürtellagen vorzusehen. Bevorzugt ist vor diesem Hintergrund ein erfindungsgemäßer Fahrzeugreifen, wobei der Fahrzeugreifen als Verstärkungslagen zumindest eine Gürtellage, bevorzugt zumindest zwei Gürtellagen, besonders bevorzugt zumindest drei Gürtellagen, ganz besonders bevorzugt zumindest vier Gürtellagen, umfasst, wobei die Gürtellagen in radialer Richtung übereinander angeordnet sind.

Mit Blick auf die Optimierung der sonstigen Eigenschaften des Fahrzeugluftreifens erachten es die Erfinder als besonders vorteilhaft, dass durch den Umstand, dass die Gürtellagen nicht Teil des Leitfähigkeitspfades sein sollen, eine besonders hohe Flexibilität hinsichtlich der Wahl der Festigkeitsträger erreicht wird. Insbesondere wird es dadurch möglich, auch Festigkeitsträger aus schlecht elektrisch leitfähigen Hochleistungsmaterialien einzusetzen, insbesondere Kohlefaser, Glasfasern und ähnlichen Materialien.

Bevorzugt ist zunächst ein erfindungsgemäßer Fahrzeugreifen, wobei die Gürtellage eine Vielzahl an zweiten Festigkeitsträgern umfasst. Bevorzugt ist zusätzlich oder alternativ ein erfindungsgemäßer Fahrzeugreifen, wobei die zweiten Festigkeitsträger der Gürtellagen ausgewählt sind aus der Gruppe bestehend aus textilen Festigkeitsträgern, insbesondere aus Aramid, metallischen Festigkeitsträgern, insbesondere aus Stahl, und anorganischen nicht-metallischen Festigkeitsträgern, insbesondere aus Kohlefasern oder Glasfaser, bevorzugt metallischen Festigkeitsträgern und anorganischen nicht-metallischen Festigkeitsträgern, besonders bevorzugt anorganischen nicht-metallischen Festigkeitsträgern.

Wiederum radial weiter außen zu den Verstärkungslagen liegt im erfindungsgemäßen Fahrzeugluftreifen der Laufstreifen, welcher in der weit überwiegenden Zahl der Fälle ein profilierter Laufstreifen sein wird. Der Laufstreifen ist dabei in der klassischen Konstruktion aus Decklage ("Cap") und Grundlage ("Base") aufgebaut, wobei ein oder mehrere Leitfähigkeitsbereiche ("CCB") eine Verbindung zwischen der elektrisch gut leitfähigen Grundlage und der Oberfläche des Laufstreifens gewährleisten. Typisch ist ein erfindungsgemäßer Fahrzeugreifen, wobei die Decklage die Grundlage kontaktiert. Denkbar ist jedoch auch ein erfindungsgemäßer Fahrzeugreifen, wobei zwischen der Decklage und der Grundlage weitere Lagen angeordnet sind. Bevorzugt ist ein erfindungsgemäßer Fahrzeugreifen, wobei der Laufstreifen genau einen Leitfähigkeitsbereich umfasst. Beim Einsatz mehrerer CCB, bevorzugt zweier CCB, liegen diese bevorzugt links und rechts der Mittelachse des Querschnitts. Bevorzugt ist zusätzlich oder alternativ auch ein erfindungsgemäßer Fahrzeugreifen, wobei der oder die Leitfähigkeitsbereiche in radialer Richtung oberhalb der Verstärkungslagen angeordnet sind.

Der Fachmann versteht, dass das erfindungsgemäß einzusetzende Verbindungselement, über das die elektrische Leitung von der "Base" des Laufstreifens in die leitfähige Reifenkarkasse erfolgt, deswegen eingesetzt wird, weil kein unmittelbarer Kontakt der Base an den Verstärkungslagen vorbei mit der Reifenkarkasse vorliegt, da ein solcher konstruktiv schwer umzusetzen und in vielen Fällen unerwünscht wäre. Es handelt sich somit in anderen Worten in der Praxis insbesondere um einen erfindungsgemäßen Fahrzeugreifen, wobei die Grundlage keinen Kontakt zu der Reifenkarkasse hat.

Zur Ausbildung eines CCB sind im Stand der Technik eine Vielzahl von Vorgehensweisen bekannt. Beispielsweise ist es möglich, während des Extrudierens eines Laufstreifens lediglich lokal eine dünne Schicht einer leitfähigen Lösung in den Laufstreifen einzubringen, um die chemische Zusammensetzung der vulkanisierbaren Kautschukmischung lokal zu verändern, sodass im Zuge der Vulkanisation ein entsprechender Leitfähigkeitsbereich ausgebildet wird. In der Praxis sind jedoch häufig solche Ausführungsformen bevorzugt, in denen der CCB aus dem gleichen Material ausgebildet wird, wie die "Base", welche im Herstellungsprozess des Laufstreifens durch die "Cap" hindurchgezogen wird. Bevorzugt ist demgemäß ein erfindungsgemäßer Fahrzeugreifen, wobei der Gummiwerkstoff G2 und der Gummiwerkstoff G3, identisch sind, wobei bevorzugt der oder die Leitfähigkeitsbereiche und die Grundlage einstückig ausgebildet sind.

In Übereinstimmung mit der fachmännischen Erwartung sind im erfindungsgemäßen Fahrzeugluftreifen beidseitig, d.h. bezogen auf die axiale Richtung oberhalb und unterhalb der Reifenkarkasse, bzw. im radialen Anschnitt rechts und links, Seitenwandbauteile angeordnet. Diese umfassen im Rahmen der vorliegenden Erfindung Gummiwerkstoffe der Kategorie S, d.h. schlecht leitende Gummiwerkstoffe, und können entsprechend in vorteilhafter Weise beispielsweise als rollwiderstandsoptimierte Gummiwerkstoffe ausgelegt werden. Beispielhaft ist ein erfindungsgemäßer Fahrzeugreifen, wobei das erste Seitenwandbauteil und das zweite Seitenwandbauteil die Karkasse kontaktieren, und/oder wobei das erste Seitenwandbauteil und das zweite Seitenwandbauteil den Laufstreifen kontaktieren, bevorzugt die Decklage und die Grundlage.

Auch wenn es grundsätzlich denkbar ist, die Seitenwandbauteile als mehrkomponentige Seitenwandbauteile aus mehreren verschiedenen Gummiwerkstoffen auszubilden, erachten es die Erfinder für die Umsetzung der vorliegenden Erfindung als bevorzugt, einstückige Seitenwandbauteile einzusetzen. Denkbar ist somit zunächst ein erfindungsgemäßer Fahrzeugreifen, wobei das erste Seitenwandbauteil ein mehrkomponentiges Seitenwandbauteil ist, welches zwei oder mehr, bevorzugt drei oder mehr weitere Gummiwerkstoff S4(i) umfasst, für welche jeweils die für den Gummiwerkstoff S4 definierten Merkmale zutreffen, und/oder wobei das zweite Seitenwandbauteil ein mehrkomponentiges Seitenwandbauteil ist, welches zwei oder mehr, bevorzugt drei oder mehr weitere Gummiwerkstoff S5(i) umfasst, für welche jeweils die für den Gummiwerkstoff S5 definierten Merkmale zutreffen. Bevorzugt ist jedoch alternativ ein erfindungsgemäßer Fahrzeugreifen, wobei das erste Seitenwandbauteil und/oder das zweite Seitenwandbauteil, bevorzugt das erste Seitenwandbauteil und das zweite Seitenwandbauteil, als einstückige Seitenwandbauteil ausgeführt sind.

Mit Blick auf eine möglichst zeit- und kosteneffiziente Herstellung schlagen die Erfinder vor, dass die Seitenwandbauteile möglichst gleichartig ausgeführt werden können. Bevorzugt ist demnach ein erfindungsgemäßer Fahrzeugreifen, wobei das erste Seitenwandbauteil und das zweite Seitenwandbauteil spiegelsymmetrisch ausgeführt sind, wobei das erste Seitenwandbauteil und das zweite Seitenwandbauteil bevorzugt spiegelsymmetrisch angeordnet sind. Bevorzugt ist zusätzlich oder alternativ auch ein erfindungsgemäßer Fahrzeugreifen, wobei der Gummiwerkstoff S4 und der Gummiwerkstoff S5, identisch sind, wobei bevorzugt zudem alle weiteren Gummiwerkstoff S4(i) mit einem entsprechenden weiteren Gummiwerkstoff S5(i) identisch sind.

Ausgehend von der bis hierhin dargelegten Konstruktion erfindungsgemäßer Fahrzeugluftreifen ist für den Fachmann ersichtlich, dass der durch die Reifenkarkasse und die Grundlage in Verbindung mit den Leitfähigkeitsbereichen aufgespannte grundsätzliche Leitpfad noch geschlossen werden muss, um die schlecht leitfähigen Verstärkungslagen beziehungsweise Seitenwandbauteile zu überbrücken. Zu diesem Zweck wird im Rahmen der vorliegenden Erfindung zumindest ein Verbindungselement eingesetzt, welches nachfolgend weiter beschrieben wird. Hinsichtlich der Positionierung dieses Verbindungselements haben die Erfinder jedoch erkannt, dass zur Gewährleistung einer mechanisch belastbaren Konstruktion und einer guten elektrischen Leitfähigkeit das Verbindungselement nicht einfach so zwischen einem Seitenwandbauteil und den Verstärkungslagen angeordnet werden sollte. Vielmehr ist es erforderlich, dass in den Randbereichen der Verstärkungslagen zusätzliche Stützelemente vorgesehen werden, die auch den für die Leitfähigkeit verantwortlichen Einsatz, d.h. das Verbindungselement, stützen und stabilisieren. Diese Elemente werden im Rahmen der vorliegenden Erfindung als Verstärkungslagenstützelemente bezeichnet. Diese Verstärkungslagenstützelemente sind bezogen auf die axiale Richtung auf beiden Seiten der Verstärkungslage positioniert und derart angeordnet, dass sie teilweise zwischen der Reifenkarkasse und der Verstärkungslage liegen, die sie beide kontaktieren. Die auf der Reifenkarkasse aufliegenden Verstärkungslagenstützelemente bilden somit Auflagen für die Verstärkungslagen und können den erfindungsgemäßen Fahrzeugluftreifen nach Art von Schulterpolstern zusätzlich stabilisieren.

Zur Erreichung vorteilhafter Fahreigenschaften sind in den erfindungsgemäßen Fahrzeugluftreifen auch die Verstärkungslagenstützelemente hinsichtlich sonstiger Eigenschaften, insbesondere des Rollwiderstandes, optimiert und nicht auf eine hohe elektrische Leitfähigkeit eingestellt. Entsprechend umfassen sie Gummiwerkstoffe der Gruppe S.

Mit Blick auf eine möglichst effiziente Fertigung, aber auch auf gleichmäßige Laufeigenschaften der herzustellenden Fahrzeugluftreifen erachten es die Erfinder für zielführend, die zwei Verstärkungslagenstützelemente auf den beiden Seiten der Verstärkungslagen möglichst gleichmäßig auszuführen und diese möglichst gleichmäßig anzuordnen. Bevorzugt ist folglich ein erfindungsgemäßer Fahrzeugreifen, wobei das erste Verstärkungslagenstützelement und das zweite Verstärkungslagenstützelement bezogen auf eine durch den Fahrzeugluftreifen laufende Spiegelebene im Wesentlichen spiegelsymmetrisch zueinander ausgeführt sind, wobei das erste Verstärkungslagenstützelement und das zweite Verbindungselement bezogen auf eine durch den Fahrzeugluftreifen laufende Spiegelebene im Wesentlichen bevorzugt spiegelsymmetrisch zueinander angeordnet sind. Bevorzugt ist zusätzlich oder alternativ ein erfindungsgemäßer Fahrzeugreifen, wobei der Gummiwerkstoff S2 und der Gummiwerkstoff S3 identisch sind.

Ein wesentlicher Aspekt der Erfindung besteht nunmehr darin, dass der Leitpfad zwischen der Grundlage des Laufstreifens und der gut leitfähigen Reifenkarkasse durch einen Einsatz erreicht wird, welcher im Rahmen der vorliegenden Erfindung als erstes Verbindungselement bezeichnet wird. Dieser umfasst einen gut leitfähigen Gummiwerkstoff, d.h. einen Gummiwerkstoff der Gruppe G, und ist im Bereich der Reifenschulter zwischen der Reifenkarkasse, der Base des Laufstreifens, dem ersten Verstärkungslagenstützelement und dem ersten Seitenwandbauteil angeordnet.

Zumindest prinzipiell ist es denkbar, dass die notwendige elektrische Leitfähigkeit des erfindungsgemäßen Fahrzeugluftreifens durch lediglich einen Leitfähigkeitspfad gewährleistet wird, welcher durch lediglich ein entsprechendes Verbindungselement realisiert wird. Insbesondere angesichts des Umstandes, dass eine möglichst spiegelsymmetrische Auslegung eines Fahrzeugluftreifens unter vielen Gesichtspunkten bevorzugt ist, erachten es die Erfinder jedoch als besonders vorteilhaft, auch ein zweites Verbindungselement auch auf der anderen Seite der Verstärkungslagen vorzusehen, mit welchem in analoger Weise ein weiterer Leitpfad zur Reifenkarkasse hergestellt werden kann. Bevorzugt ist somit ein erfindungsgemäßer Fahrzeugreifen, wobei der Fahrzeugreifen zusätzlich umfasst:
vii) ein zweites Verbindungselement, umfassend einen Gummiwerkstoff G5, wobei das zweite Verbindungselement zwischen der Reifenkarkasse und der Grundlage angeordnet ist und wobei das zweite Verbindungselement zwischen dem zweiten Verstärkungslagenstützelement und dem zweiten Seitenwandbauteil angeordnet ist. Besonders relevant ist insoweit in Übereinstimmung mit der fachmännischen Erwartung ein erfindungsgemäßer Fahrzeugreifen, wobei der Gummiwerkstoff G5 einen spezifischen elektrischen Widerstand bei 20 °C aufweist, der kleiner ist als ρ_{(S; min)}.

Mit Blick auf eine möglichst zeit- und kosteneffiziente Ausgestaltung bei der Herstellung können dabei das erste und das zweite Verbindungselement möglichst gleichartig ausgeführt werden. Bevorzugt ist entsprechend ein erfindungsgemäßer Fahrzeugreifen, wobei der Gummiwerkstoff G5 dem Gummiwerkstoff G4 entspricht. Bevorzugt ist zusätzlich oder alternativ ein erfindungsgemäßer Fahrzeugreifen, wobei das erste Verbindungselement und das zweite Verbindungselement bezogen auf eine durch den Fahrzeugluftreifen laufende Spiegelebene im Wesentlichen spiegelsymmetrisch ausgeführt sind, wobei das erste Verbindungselement und das zweite Verbindungselement bevorzugt bezogen auf eine durch den Fahrzeugluftreifen laufende Spiegelebene im Wesentlichen spiegelsymmetrisch angeordnet sind.

Erfindungsgemäß wird die Position des Verbindungselements dadurch definiert, dass dieses zwischen dem Verstärkungslagenstützelement und dem Seitenwandbauteil angeordnet ist, womit bezogen auf die axiale Richtung die Position fixiert wird. In radialer Richtung ist das Verbindungselement zwischen der Grundlage und der Reifenkarkasse angeordnet. In dieser Position zwischen den zwei schlecht leitfähigen Bauteilen und den zwei gut leitfähigen Bauteilen kann das Verbindungselement die vorgesehene Rolle übernehmen, zum Leitpfad beizutragen.

Der Fachmann versteht, dass es insoweit prinzipiell denkbar wäre, für den Schluss des Leitfähigkeitspfades theoretisch weitere Bauteile vorzusehen, beispielsweise eine dünne Lage aus leitfähigem Gummiwerkstoff zwischen dem Verbindungselement und der Reifenkarkasse. Gleichzeitig erachten es die Erfinder jedoch für besonders bevorzugt, die Zahl der vorliegenden Bauteile möglichst weit zu reduzieren und den Leitfähigkeitspfad möglichst vollständig mit dem Verbindungselement zu schließen, indem dieses die Reifenkarkasse und die Grundlage unmittelbar kontaktiert. Bevorzugt ist somit ein erfindungsgemäßer Fahrzeugreifen, wobei das erste Verbindungselement die Grundlage kontaktiert, und/oder wobei das erste Verbindungselement die Reifenkarkasse kontaktiert. Bevorzugt ist analog ein erfindungsgemäßer Fahrzeugreifen, wobei das zweite Verbindungselement die Grundlage kontaktiert, und/oder wobei das zweite Verbindungselement die Reifenkarkasse kontaktiert.

In analoger Weise wäre es auch denkbar, zwischen dem Verbindungselement und dem Verstärkungslagenstützelement beziehungsweise dem Seitenwandbauteil weitere Bauteile vorzusehen. Jedoch ist dies nach Einschätzung der Erfinder mit Blick auf die Komplexität der Reifenkonstruktion und insbesondere auch die mechanische Belastbarkeit der herstellbaren Fahrzeugluftreifen weniger bevorzugt, sodass es auch insoweit vorteilhaft ist, wenn das Verbindungselement die zwei schlecht leitfähigen Elemente kontaktiert. Bevorzugt ist somit ein erfindungsgemäßer Fahrzeugreifen, wobei das erste Verbindungselement das erste Verstärkungslagenstützelement kontaktiert, und/oder wobei das erste Verbindungselement das erste Seitenwandbauteil kontaktiert. Bevorzugt ist wiederum analog ein erfindungsgemäßer Fahrzeugreifen, wobei das zweite Verbindungselement das zweite Verstärkungslagenstützelement kontaktiert, und/oder wobei das zweite Verbindungselement das zweite Seitenwandbauteil kontaktiert.

Zur Umsetzung einer besonders zeit- und kosteneffizienten Fertigung schlagen die Erfinder vor, dass die Verbindungselemente, analog zu den meisten anderen Bauteilen in einem Fahrzeugluftreifen, als einteilige Elemente ausgeführt werden können, die sich über den gesamten Umfang des Fahrzeugreifens erstrecken und beispielsweise als Streifen auf den auf der Reifenaufbautrommel vorgelegten Rohling aufgebracht werden können. Zur Optimierung des Rollwiderstandes schlagen die Erfinder jedoch vor, dass ein komplett umlaufendes Verbindungselement in vielen Fällen nicht notwendig sein wird, um eine ausreichende elektrische Leitfähigkeit herzustellen, was insbesondere an der hohen elektrischen Leitfähigkeit des entsprechenden Gummiwerkstoffs liegt. Insoweit kann es ausreichend sein, lediglich an über den Umfang voneinander beabstandeten Punkten entsprechende Teilverbindungselemente vorzusehen, welche eine Vielzahl von Leitpfaden bilden, wohingegen die zwischenliegenden Bereiche wiederum mit einer rollwiderstandsoptimierten Gummimischung ausgefüllt werden können, was trotz des erhöhten Fertigungsaufwandes insbesondere für Hochleistungsanwendungen als vorteilhaft angesehen wird. Bevorzugt ist somit zunächst aus fertigungstechnischer Sicht ein erfindungsgemäßer Fahrzeugreifen, wobei das erste Verbindungselement und/oder das zweite Verbindungselement, bevorzugt das erste Verbindungselement und das zweite Verbindungselement, einteilig ausgeführte Elemente sind, die sich über den Umfang des Fahrzeugreifens erstrecken. Bevorzugt ist insbesondere für Hochleistungsanwendungen jedoch alternativ ein erfindungsgemäßer Fahrzeugreifen, wobei das erste Verbindungselement und/oder das zweite Verbindungselement, bevorzugt das erste Verbindungselement und das zweite Verbindungselement, mehrteilig ausgeführte Elemente sind, deren Teile über den Umfang des Fahrzeugreifens verteilt angeordnet sind, wobei die Teile bevorzugt voneinander beabstandet angeordnet sind.

Es kann als großer Vorteil der vorliegenden Erfindung gesehen werden, dass sich die vorteilhaften Leitfähigkeitseigenschaften schon beim Einsatz vergleichsweise kleiner Verbindungselement realisieren lassen. Hierdurch ist es in vorteilhafter Weise möglich, den negativen Einfluss auf den Gesamtrollwiderstand zu minimieren. Den Erfindern ist es insoweit gelungen, für die Verbindungselemente besonders zielführende Abmessungen zu identifizieren, mit denen sich der Zielkonflikt aus mechanischer Belastbarkeit, guten Rollwiderständen und vorteilhafter Leitfähigkeit besonders effizient lösen lässt. Bevorzugt ist nämlich ein erfindungsgemäßer Fahrzeugreifen, wobei das erste Verbindungselement und/oder das zweite Verbindungselement, bevorzugt das erste Verbindungselement und das zweite Verbindungselement, in axialer Richtung eine maximale Dicke im Bereich von 0,01 bis 10 mm, bevorzugt im Bereich von 1 bis 5 mm, besonders bevorzugt im Bereich von 2 bis 4 mm, aufweisen. Bevorzugt ist zusätzlich oder alternativ ein erfindungsgemäßer Fahrzeugreifen, wobei das erste Verbindungselement und/oder das zweite Verbindungselement, bevorzugt das erste Verbindungselement und das zweite Verbindungselement, im radialen Anschnitt durch den Fahrzeugreifen für die parallel zur Reifenkarkasse verlaufende, bevorzugt die Reifenkarkasse kontaktierende, Unterkante eine mittlere Länge im Bereich von 0,01 bis 20 mm, bevorzugt im Bereich von 5 bis 15 mm, besonders bevorzugt im Bereich von 7 bis 12 mm, aufweist. Bevorzugt ist wiederum zusätzlich oder alternativ ein erfindungsgemäßer Fahrzeugreifen, wobei das erste Verbindungselement und/oder das zweite Verbindungselement, bevorzugt das erste Verbindungselement und das zweite Verbindungselement, im radialen Anschnitt durch den Fahrzeugreifen eine kleinere Fläche aufweist als das entsprechende erste bzw. zweite Verstärkungslagenstützelement, wobei die Fläche bevorzugt 70 % oder weniger, bevorzugt 50 % oder weniger, besonders bevorzugt 30 % oder weniger, beträgt.

Neben den vorstehend genannten Bestandteilen kann der erfindungsgemäße Fahrzeugluftreifen auch weitere Komponenten umfassen. Insoweit erachten die Erfinder beispielsweise den Einsatz weiterer Verstärkungslagenstützelemente als vorteilhaft, welche anders als die zuvor diskutierten Verstärkungslagenstützelemente nicht zwischen einer Verstärkungslage und der Reifenkarkasse angeordnet werden, sondern beim Einsatz von zwei oder mehr Verstärkungslagen zwischen den Verstärkungslagen zum Einsatz kommen, wobei auch in diesem Fall idealerweise auf schlecht leitfähige Gummiwerkstoffe zurückgegriffen wird. Bevorzugt ist somit ein erfindungsgemäßer Fahrzeugreifen, wobei der Fahrzeugluftreifen zusätzlich umfasst:
viii) ein drittes Verstärkungslagenstützelement, umfassend einen Gummiwerkstoff S7, und ein viertes Verstärkungslagenstützelement, umfassend einen Gummiwerkstoff S8, wobei das dritte Verstärkungslagenstützelement und das vierte Verstärkungslagenstützelement bezogen auf die axiale Richtung auf unterschiedlichen Seiten der Verstärkungslagen zumindest abschnittsweise derart zwischen zwei Verstärkungslagen angeordnet sind, dass sie die zwei Verstärkungslagen kontaktieren.

Bevorzugt ist insoweit ein erfindungsgemäßer Fahrzeugreifen, wobei der Gummiwerkstoff S7 und der Gummiwerkstoff S8 identisch sind.

Bevorzugt ist zusätzlich oder alternativ auch ein erfindungsgemäßer Fahrzeugreifen, wobei der Gummiwerkstoff S7 und der Gummiwerkstoff S8 einen spezifischen elektrischen Widerstand bei 20 °C aufweist, der größer ist als ρ_{(G; max)}.

Darüber hinaus können auch weitere übliche Reifenbestandteile vorgesehen werden, insbesondere bei der Ausgestaltung der Wulstbereiche des Fahrzeugluftreifens. Für im Wesentlichen alle Ausführungsformen relevant ist ein erfindungsgemäßer Fahrzeugreifen, wobei der Fahrzeugluftreifen zusätzlich umfasst:
ix) zwei jeweils in einem Wulstbereich der Reifenkarkasse angeordnete Wulstelemente, wobei die Wulstelemente bevorzugt einen Wulstkern, insbesondere einen metallischen Wulstkern, umfassen.

In Übereinstimmung mit dem fachmännischen Verständnis können die vorstehend offenbarten Bauteile, welche jeweils einen Gummiwerkstoff umfassen, neben dem Gummiwerkstoff, beziehungsweise im Falle der Reifenkarkasse und den Verstärkungslagen neben dem jeweiligen Gummiwerkstoff und den Festigkeitsträgern, noch weitere Komponenten umfassen. Insbesondere bei den zur Einstellung der Leitfähigkeit eingesetzten Verbindungselementen können nach Einschätzung der Erfinder auch weitere leitfähigkeitsfördernde Elemente zugesetzt werden, wie es nachfolgend weiter offenbart wird. Darüber hinaus erachten es die Erfinder jedoch für im Wesentlichen alle Ausführungsformen als bevorzugt, wenn die jeweiligen Komponenten über den Gummiwerkstoff beziehungsweise über den Gummiwerkstoff und die Festigkeitsträger hinaus möglichst wenig andere Komponenten umfassen und somit möglichst weitgehend aus den entsprechenden Gummiwerkstoffen beziehungsweise Gummiwerkstoffen und Festigkeitsträgern bestehen. Bevorzugt ist somit ein erfindungsgemäßer Fahrzeugreifen, wobei die Reifenkarkasse und/oder die Verstärkungslagen, bevorzugt die Reifenkarkasse und die Verstärkungslagen, jeweils zu einem kombinierten Massenanteil von 90 % oder mehr, bevorzugt 95 % oder mehr, besonders bevorzugt 98 % oder mehr, ganz besonders bevorzugt zu 99 % oder mehr, insbesondere bevorzugt 100 % oder mehr, aus dem jeweiligen Gummiwerkstoff und den Festigkeitsträgern bestehen, bezogen auf die Masse des jeweiligen Bauteils. Bevorzugt ist zusätzlich oder alternativ zudem ein erfindungsgemäßer Fahrzeugreifen, wobei die Seitenwandbauteile und/oder die Verstärkungsstützelemente und/oder die Komponenten des Laufstreifens jeweils zu einem kombinierten Massenanteil von 90 % oder mehr, bevorzugt 95 % oder mehr, besonders bevorzugt 98 % oder mehr, ganz besonders bevorzugt zu 99 % oder mehr, insbesondere bevorzugt 100 % oder mehr, aus dem jeweiligen Gummiwerkstoff bestehen, bezogen auf die Masse des jeweiligen Bauteils.

Bevorzugt ist mit Blick auf die Verbindungselemente ein erfindungsgemäßer Fahrzeugreifen, wobei das erste Verbindungselement und/oder das zweite Verbindungselement, bevorzugt das erste Verbindungselement und das zweite Verbindungselement, jeweils zu einem Massenanteil von 90 % oder mehr, bevorzugt 95 % oder mehr, besonders bevorzugt 98 % oder mehr, ganz besonders bevorzugt zu 99 % oder mehr, insbesondere bevorzugt 100 % oder mehr, aus dem jeweiligen Gummiwerkstoff bestehen, bezogen auf die Masse des jeweiligen Verbindungselements. Bevorzugt ist zusätzlich oder alternativ darüber hinaus ein erfindungsgemäßer Fahrzeugreifen, wobei das erste Verbindungselement und/oder das zweite Verbindungselement, bevorzugt das erste Verbindungselement und das zweite Verbindungselement, ein oder mehrere makroskopische leitfähige Partikel, beispielsweise metallische Partikel, umfasst, bevorzugt jeweils in einem kombinierten Massenanteil von 10 % oder weniger, bevorzugt 5 % oder weniger, besonders bevorzugt 2 % oder weniger, bezogen auf die Masse des jeweiligen Verbindungselements.

Nach Einschätzung der Erfinder sollten die vorteilhaften Leitfähigkeitseigenschaften, welche durch das Vorsehen der Verbindungselemente erreicht werden können, dazu genutzt werden, um in den schlechter leitfähigen Gummiwerkstoffen andere wichtige Eigenschaften zu optimieren. Hierbei schlagen die Erfinder vor, dass insbesondere der Rollwiderstand der entsprechenden Gummiwerkstoffe minimiert werden sollte, um die optimalen Vorteile aus der vorliegenden Erfindung zu ziehen. Ein geeigneter Parameter zur Einstellung des Rollwiderstandes ist dabei der Verlustfaktor tan δ bei 70°C, welcher für den Fachmann eine bekannte Charakterisierungsgröße für Gummiwerkstoffe ist. Bevorzugt ist entsprechend ein erfindungsgemäßer Fahrzeugreifen, wobei zumindest einer der Gummiwerkstoffe S1 bis S8, bevorzugt der Gummiwerkstoff S1 und/oder der Gummiwerkstoff S2 und/oder der Gummiwerkstoff S3 und/oder der Gummiwerkstoff S4 und/oder der Gummiwerkstoff S5 und/oder der Gummiwerkstoff S6 und/oder der Gummiwerkstoff S7 und/oder der Gummiwerkstoff S8, besonders bevorzugt sämtliche Gummiwerkstoffe S1 bis S8 bei 70 °C einen Verlustfaktor tan δ gemäß DIN 53513:1990-03 im Bereich von 0,01 bis 0,15, bevorzugt im Bereich von 0,02 bis 0,12, besonders bevorzugt im Bereich von 0,03 bis 0,10, aufweist.

Die Leitfähigkeitseigenschaften eines Gummiwerkstoffs sowie auch die mechanischen Eigenschaften, insbesondere hinsichtlich des Rollwiderstandes, können durch eine Veränderung der chemischen Zusammensetzung der vulkanisierbaren Kautschukmischung erreicht werden, die den jeweiligen Gummiwerkstoffen zugrunde liegen, wobei entsprechende Konzepte zur Einstellung der gewünschten Eigenschaften dem Fachmann im Bereich der Technik wohl vertraut und auch im Stand der Technik umfassend offenbart werden. Nach Einschätzung der Erfinder eignen sich für sämtliche Gummiwerkstoffe dabei insbesondere solche vulkanisierbaren Kautschukmischungen, welche auf den Einsatz von Dienkautschuken setzen. Bevorzugt ist vor diesem Hintergrund zunächst ein erfindungsgemäßer Fahrzeugreifen, wobei die vulkanisierbaren Kautschukmischungen VK-S1 bis VK-S8 und VK-G1 bis VK-G5 einen oder mehrere Dienkautschuke umfassen. Besonders bevorzugt ist dabei ein erfindungsgemäßer Fahrzeugreifen, wobei der eine oder die mehreren Dienkautschuke ausgewählt sind aus der Gruppe bestehend aus natürlichem Polyisopren, synthetischem Polyisopren, epoxidiertem Polyisopren, Butadien-Kautschuk, lösungspolymerisiertem Styrol-Butadien-Kautschuk, emulsionspolymerisiertem Styrol-Butadien-Kautschuk, Polynorbornen, Ethylen-Propylen-Dien-Kautschuk, NitrilKautschuk, Acrylat-Kautschuk, Styrol-Isopren-Butadien-Terpolymer, Butylkautschuk und Halobutylkauschuk, wobei der eine oder die mehreren Dienkautschuke bevorzugt ausgewählt ist aus der Gruppe bestehend aus natürlichem Polyisopren (NR), synthetischem Polyisopren (IR), Butadien-Kautschuk (BR), lösungspolymerisiertem Styrol-Butadien-Kautschuk (SSBR) und emulsionspolymerisiertem Styrol-Butadien-Kautschuk (ESBR), wobei der eine oder die mehreren Dienkautschuke besonders bevorzugt ausgewählt ist aus der Gruppe bestehend aus lösungspolymerisiertem Styrol-Butadien-Kautschuk und emulsionspolymerisiertem Styrol-Butadien-Kautschuk.

Bevorzugt ist zusätzlich oder alternativ zudem ein erfindungsgemäßer Fahrzeugreifen, wobei die vulkanisierbaren Kautschukmischungen VK-S1 bis VK-S8 und VK-G1 bis VK-G5 ein oder mehrere Additive umfassen, wobei die weiteren Additive bevorzugt ausgewählt sind aus der Gruppe bestehend aus Weichmachern, Kupplungsagenzien, Methylen-Donoren, Alterungsschutzmittel, beispielsweise N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ), Aktivatoren, beispielsweise Zinkoxid und Fettsäuren, Wachsen, Mastikationshilfsmitteln, beispielsweise 2,2'-Dibenzamidodiphenyldisulfid (DBD) und Verarbeitungshilfsmitteln.

Für die Umsetzung rollwiderstandsoptimierter Gummiwerkstoffe empfehlen die Erfinder hohe Anteile an zumiest schlecht leitenden siliciumbasierten Füllstoffen. Bevorzugt ist nämlich ein erfindungsgemäßer Fahrzeugreifen, wobei die vulkanisierbaren Kautschukmischungen VK-S1 bis VK-S8 einen oder mehrere erste Füllstoffe umfassen, die ausgewählt sind aus der Gruppe bestehend aus pyrogenem Siliciumdioxid und gefälltem Siliciumdioxid, bevorzugt gefälltem Siliciumdioxid, bevorzugt in einem kombinierten Massenanteil von 40 phr oder mehr, bevorzugt 80 phr oder mehr, besonders bevorzugt 120 phr oder mehr.

Die Einstellung der elektrischen Leitfähigkeit kann im Gegensatz hierzu über die Zugabe elektrisch leitfähiger Füllstoffe, insbesondere von Rußen eingestellt werden, wobei dies bei einem vorgegebenen Gesamtfüllstoffgehalt zumeist mit einer Verschlechterung der Rollwiderstandseigenschaften einhergeht. Die tatsächliche Menge an Ruß, welche für die Einstellung einer guten elektrischen Leitfähigkeit erforderlich ist, hängt in der Praxis von der Art der eingesetzten Ruße ab, wobei sich beim Einsatz sogenannter Leitruße auch bei niedrigeren Gehalten schon ausreichende elektrische Leitfähigkeiten erzielen lassen. Bevorzugt ist insoweit ein erfindungsgemäßer Fahrzeugreifen, wobei die vulkanisierbaren Kautschukmischungen VK-S1 bis VK-S8 weniger als 15 phr, bevorzugt weniger als 5 phr, besonders bevorzugt weniger als 2 phr, ganz besonders bevorzugt weniger als 1 phr, insbesondere 0 phr, an zweiten Füllstoffen, die ausgewählt sind aus der Gruppe bestehend aus Rußen, bevorzugt Leitrußen, umfassen. Bevorzugt ist zusätzlich oder alternativ ein erfindungsgemäßer Fahrzeugreifen, wobei die vulkanisierbaren Kautschukmischungen VK-G1 bis VK-G5 einen oder mehrere zweiten Füllstoffe umfassen, die ausgewählt sind aus der Gruppe bestehend aus Rußen, bevorzugt Leitrußen, bevorzugt in einem kombinierten Massenanteil von 10 phr oder mehr, bevorzugt 20 phr oder mehr, besonders bevorzugt 30 phr oder mehr.

Um die Leitfähigkeit in den gut leitfähigen Gummiwerkstoffen nicht durch einen hohen Anteil schlecht leitfähiger Füllstoffe zu beeinträchtigen, schlagen die Erfinder vor, den Anteil an schlecht leitfähigen ersten Füllstoffen, insbesondere an Siliciumdioxid gering zu halten. Bevorzugt ist entsprechend ein erfindungsgemäßer Fahrzeugreifen, wobei die vulkanisierbaren Kautschukmischungen VK-G1 bis VK-G5 weniger als 20 phr, bevorzugt weniger als 15 phr, besonders bevorzugt weniger als 10 phr, ganz besonders bevorzugt weniger als 5 phr, insbesondere 0 phr, an ersten Füllstoffen, die ausgewählt sind aus der Gruppe bestehend aus pyrogenem Siliciumdioxid und gefälltem Siliciumdioxid, umfassen.

Die Angabe phr (parts per hundred parts of rubber by weight) ist die in der Kautschukindustrie übliche Mengenangabe für Mischungsrezepturen, über die die Massenanteile der Komponenten in der Kautschukmischung bezogen auf die Masse der in der Kautschukmischung vorhandenen hochmolekularen (gewichtsmittlere Molmasse Mw gemäß GPC größer als 60.000 g/mol) Kautschuke angegeben werden, wobei der kombinierte Masseanteil der hochmolekularen Kautschuke in der Kautschukmischung 100 phr entspricht.

Nachfolgend werden die Erfindung und bevorzugte Ausführungsformen der Erfindung unter Bezugnahme auf die beiliegenden Figuren näher erläutert und beschrieben. Dabei zeigen:
- Fig. 1: eine schematische Querschnittsdarstellung entlang eines radialen Schnittes durch einen erfindungsgemäßen Fahrzeugluftreifen in einer bevorzugten Ausführungsform; und
- Fig. 2: eine vergrößerte Darstellung von zwei leicht vereinfachten Ausschnitten aus den Schulterbereichen des erfindungsgemäßen Fahrzeugluftreifens der Fig. 1.

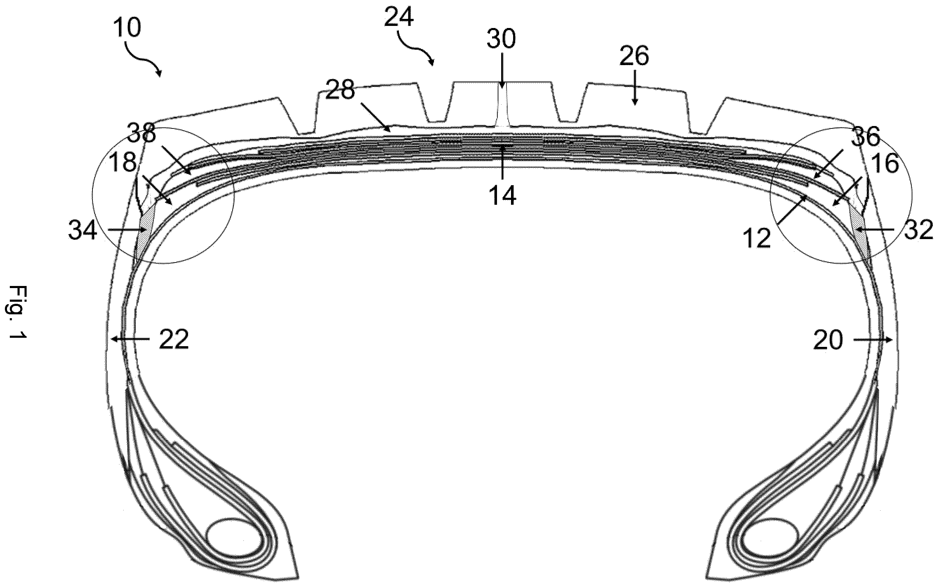

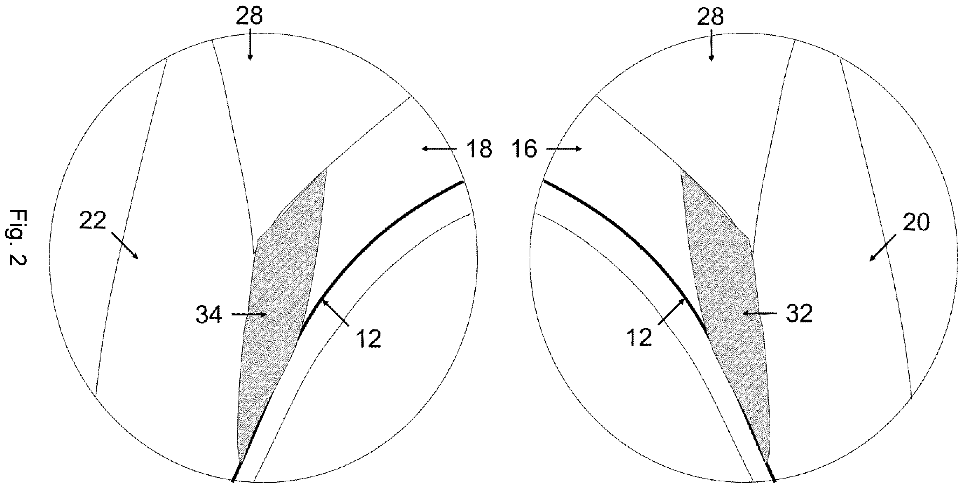

Fig. 1 zeigt eine schematische Querschnittsdarstellung im radialen Anschnitt durch einen erfindungsgemäßen Fahrzeugluftreifen 10 in einer bevorzugten Ausführungsform. Die entsprechenden vergrößerten Ausschnitte der maßgeblichen Schulterbereiche des Fahrzeugluftreifens 10 sind dabei in Fig. 2 vergrößert dargestellt.

Der Fahrzeugluftreifen 10 umfasst eine Reifenkarkasse 12, welche einen in eine Gummierung aus einem Gummiwerkstoff G1 eingebetteten stählernen Festigkeitsträger umfasst. Die Reifenkarkasse 12 erstreckt sich dabei zwischen den beidseitigen Reifenwülsten und ist auf der Innenseite von einer Reifeninnenschicht bedeckt. In radialer Richtung oberhalb der Reifenkarkasse 12 sind im gezeigten Beispiel der Fig. 1 vier Verstärkungslagen 14 angeordnet, welche jeweils als Gürtellagen ausgeführt sind und jeweils eine Vielzahl von metallischen Festigkeitsträgern umfassen, die in einem Gummiwerkstoff S1 eingebettet sind.

In radialer Richtung weiter außen liegt der Laufstreifen 24, welcher eine Decklage 26 umfasst, die durch einen Leitfähigkeitsbereich 30 unterbrochen wird, welcher aus der unterliegenden Grundlage 28 bis an die Oberfläche des Fahrzeugluftreifens 10 hochgezogen wurde. Während die Decklage 26 aus einem mit gefälltem Siliciumdioxid hoch gefüllten, rollwiderstandsoptimierten Gummiwerkstoff S6 ausgebildet ist, bestehen die Grundlage 28 und der Leitfähigkeitsbereich 30 jeweils aus einem rußreichen Gummiwerkstoff G2/G3. Die Grundlage 28 des Laufstreifens 24 erstreckt sich entlang der axialen Richtung weit in die Schulterbereich des Fahrzeugluftreifens 10 und überragt dabei auch die Verstärkungslagen 14. Im gezeigten Beispiel kontaktiert die Grundlage 28 das erste Seitenwandbauteil 20 und das zweite Seitenwandbauteil 22, welche bezogen auf die axiale Richtung die äußeren Elemente des Fahrzeugluftreifens 10 bilden und jeweils aus dem gleichen Gummiwerkstoff S4/S5 bestehen.

Die Verstärkungslagen 14 werden durch ein unterliegendes erstes Verstärkungslagenstützelement 16 und ein zweites Verstärkungslagenstützelement 18 gestützt, welche aus dem gleichen Gummiwerkstoff S2/S3 ausgebildet sind. Im gezeigten Beispiel sind darüber hinaus auch ein drittes Verstärkungslagenstützelement 36 und ein viertes Verstärkungslagenstützelement 38 vorgesehen, welche wiederum aus dem gleichen Gummiwerkstoff S7/S8 ausgebildet sind, welcher sich aber vom Gummiwerkstoff S2/S3 unterscheidet.

In den Schulterbereichen ist ein erstes Verbindungselement 32 beziehungsweise ein zweites Verbindungselement 34 so angeordnet, dass diese jeweils die Reifenkarkasse, das entsprechende Seitenwandbauteil 20, 22, das entsprechende Verstärkungslagenstützelement 16, 18 und die Grundlage 28 des Laufstreifens 24 kontaktieren. Das erste Verbindungselement 32 und das zweite Verbindungselement 34 sind dabei jeweils als über den Umfang des Fahrzeugluftreifens 10 umlaufende Elemente ausgeführt und bestehen im gezeigten Beispiel vollständig aus einem Gummiwerkstoff G4/G5, welcher wegen seines hohen Rußgehaltes eine hohe Leitfähigkeit aufweist.

Die in der Reifenkarkasse 12, den Verbindungselementen 32, 34 der Grundlage 28 und dem Leitfähigkeitsbereich 30 eingesetzten Gummiwerkstoffe weisen bei 23 °C jeweils einen spezifischen elektrischen Widerstand von weniger als 10⁵ Ω m auf. Im Gegensatz dazu liegt der elektrische Widerstand der in den Seitenwandbauteilen 20, 22, den Verstärkungslagen 14, den Verstärkungslagenstützelementen 16, 18, 36, 38 und der Decklage 26 verbauten Gummiwerkstoffe jeweils über einem spezifischen elektrischen Widerstand bei 23 °C von mehr als 10⁷ Ω m. Im Ausgleich für die schlechte elektrische Leitfähigkeit weisen die Gummiwerkstoffe dieser Komponenten jedoch einen sehr niedrigen Verlustfaktor tan δ auf, welcher im dargestellten Beispiel nämlich unter 0,15 liegt.

### Bezugszeichenliste

- 10: Fahrzeugluftreifen
- 12: Reifenkarkasse
- 14: Verstärkungslagen
- 16: erstes Verstärkungslagenstützelement
- 18: zweites Verstärkungslagenstützelement
- 20: erstes Seitenwandbauteil
- 22: zweites Seitenwandbauteil
- 24: Laufstreifen
- 26: Decklage
- 28: Grundlage
- 30: Leitfähigkeitsbereich
- 32: erstes Verbindungselement
- 34: zweites Verbindungselement
- 36: drittes Verstärkungslagenstützelement
- 38: viertes Verstärkungslagenstützelement

## Patentansprüche

1. Fahrzeugluftreifen (10), umfassend:
i) eine Reifenkarkasse (12), umfassend einen oder mehrere in einem Gummiwerkstoff G1 eingebettete erste Festigkeitsträger, wobei die ersten Festigkeitsträger metallische Festigkeitsträger sind,
ii) eine oder mehrere relativ zur Reifenkarkasse (12) in radialer Richtung außenliegende Verstärkungslagen (14), umfassend einen oder mehrere in einem Gummiwerkstoff S1 eingebettete zweiten Festigkeitsträger,
iii) ein erstes Verstärkungslagenstützelement (16), umfassend einen Gummiwerkstoff S2, und ein zweites Verstärkungslagenstützelement (18), umfassend einen Gummiwerkstoff S3, wobei das erste Verstärkungslagenstützelement (16) und das zweites Verstärkungslagenstützelement (18) bezogen auf die axiale Richtung auf unterschiedlichen Seiten der Verstärkungslage zumindest abschnittsweise derart zwischen der Reifenkarkasse (12) und der Verstärkungslage (14) angeordnet sind, dass sie die Reifenkarkasse (12) und eine Verstärkungslage (14) kontaktieren,
iv) ein relativ zur Reifenkarkasse (12) in axialer Richtung oberhalb angeordnetes erstes Seitenwandbauteil (20), umfassend einen Gummiwerkstoff S4, und ein relativ zur Reifenkarkasse (12) in axialer Richtung oberhalb angeordnetes zweites Seitenwandbauteil (22), umfassend einen Gummiwerkstoff S5,
v) einen relativ zur der oder den Verstärkungslagen (14) in radialer Richtung außenliegenden Laufstreifen (24), umfassend:
v.1) eine Decklage (26), umfassend einen Gummiwerkstoff S6,
v.2) eine relativ zur Decklage (26) in radialer Richtung innenliegende Grundlage (28), umfassend einen Gummiwerkstoff G2, und
v.3) einen oder mehrere Leitfähigkeitsbereiche (30), umfassend einen Gummiwerkstoff G3, wobei sich der oder die Leitfähigkeitsbereiche (30) durch die Decklage (26) hindurch bis zur radial außenliegenden Oberfläche der Decklage (26) erstrecken, und
vi) ein erstes Verbindungselement (32), umfassend einen Gummiwerkstoff G4, wobei das erste Verbindungselement (32) zwischen der Reifenkarkasse (12) und der Grundlage (28) angeordnet ist, und wobei das erste Verbindungselement (32) zwischen dem ersten Verstärkungslagenstützelement (16) und dem ersten Seitenwandbauteil (20) angeordnet ist,
wobei gilt, dass ρ_{(S; min)} größer ist als ρ_{(G; max),}
wobei ρ_{(S; min)} der kleinste spezifische elektrische Widerstand bei 20 °C der spezifischen elektrischen Widerstände bei 20 °C des Gummiwerkstoffs S1, des Gummiwerkstoffs S2, des Gummiwerkstoffs S3, des Gummiwerkstoffs S4, Gummiwerkstoffs S5 und des Gummiwerkstoffs S6 ist, und
wobei ρ_{(G; max)} der größte spezifische elektrische Widerstand bei 20 °C der spezifischen elektrischen Widerstände bei 20 °C des Gummiwerkstoffs G1, des Gummiwerkstoffs G2, Gummiwerkstoffs G3 und des Gummiwerkstoffs G4 ist.

2. Fahrzeugluftreifen (10) nach Anspruch 1, wobei der Fahrzeugluftreifen (10) zusätzlich umfasst:
vii) ein zweites Verbindungselement (34), umfassend einen Gummiwerkstoff G5, wobei das zweite Verbindungselement (34) zwischen der Reifenkarkasse (12) und der Grundlage (28) angeordnet ist, und wobei das zweite Verbindungselement (34) zwischen dem zweiten Verstärkungslagenstützelement (18) und dem zweiten Seitenwandbauteil (22) angeordnet ist,

3. Fahrzeugluftreifen (10) nach Anspruch 2, wobei der Gummiwerkstoff G5 einen spezifischen elektrischen Widerstand bei 20 °C aufweist, der kleiner ist als ρ_{(S; min)}.

4. Fahrzeugluftreifen (10) nach einem der Ansprüche 1 bis 3, wobei das erste Verbindungselement die Grundlage kontaktiert, und/oder wobei das erste Verbindungselement die Reifenkarkasse kontaktiert.

5. Fahrzeugluftreifen (10) nach einem der Ansprüche 1 bis 4, wobei das erste Verbindungselement (32) das erste Seitenwandbauteil (20) kontaktiert, und/oder wobei das erste Verbindungselement (32) das erste Verstärkungslagenstützelement (16) kontaktiert.

6. Fahrzeugluftreifen (10) nach einem der Ansprüche 1 bis 5, wobei ρ_{(S; min)} 10⁶ Ω m oder mehr beträgt.

7. Fahrzeugluftreifen (10) nach einem der Ansprüche 1 bis 6, wobei ρ_{(G; max)} weniger als 10⁶ Ω m beträgt.

8. Fahrzeugluftreifen (10) nach einem der Ansprüche 1 bis 7, wobei gilt, dass ρ_{(S;} min) größer ist als 2*ρ_{(G;} max).

9. Fahrzeugluftreifen (10) nach einem der Ansprüche 1 bis 8, wobei der Gummiwerkstoff S1 und/oder der Gummiwerkstoff S2 und/oder der Gummiwerkstoff S3 und/oder der Gummiwerkstoff S4 und/oder der Gummiwerkstoff S5 und/oder der Gummiwerkstoff S6, bei 70 °C einen Verlustfaktor tan δ gemäß DIN 53513:1990-03 im Bereich von 0,01 bis 0,15 aufweisen.

10. Fahrzeugluftreifen (10) nach einem der Ansprüche 1 bis 9, wobei das erste Verbindungselement und/oder das zweite Verbindungselement, in axialer Richtung eine maximale Dicke im Bereich von 0,01 bis 10 mm aufweist.

11. Fahrzeugluftreifen (10) nach einem der Ansprüche 1 bis 10, wobei das erste Verbindungselement und/oder das zweite Verbindungselement, im radialen Anschnitt durch den Fahrzeugreifen für die parallel zur Reifenkarkasse verlaufende Unterkante eine mittlere Länge im Bereich von 0,01 bis 20 mm aufweist.

12. Fahrzeugluftreifen (10) nach einem der Ansprüche 1 bis 11, wobei der Fahrzeugluftreifen (10) zusätzlich umfasst:
viii) ein drittes Verstärkungslagenstützelement (36), umfassend einen Gummiwerkstoff S7, und ein viertes Verstärkungslagenstützelement (38), umfassend einen Gummiwerkstoff S8, wobei das dritte Verstärkungslagenstützelement (36) und das vierte Verstärkungslagenstützelement (38) bezogen auf die axiale Richtung auf unterschiedlichen Seiten der Verstärkungslagen (14) zumindest abschnittsweise derart zwischen zwei Verstärkungslagen (14) angeordnet sind, dass sie die zwei Verstärkungslagen (14) kontaktieren.
